# EUROPEAN PATENT SPECIFICATION

(11) **EP 3 540 315 B1**
(45) Date of publication and mention of the grant of the patent: **10.11.2021**
(21) Application number: 19162051.7
(22) Date of filing: 11.03.2019
(51) Int. Cl.: F24C 7/08

(54) **COOKING APPLIANCE WITH AN IMAGING DEVICE**
KOCHGERÄT MIT EINER BILDGEBUNGSVORRICHTUNG
APPAREIL DE CUISSON COMPORTANT UN DISPOSITIF D'IMAGERIE

(30) Priority: 14.03.2018 US 201815920893
(43) Date of publication of application: 18.09.2019
(73) Proprietor: Whirlpool Corporation, Benton Harbor, MI 49022 (US)
(72) Inventor: Ebrom, Matthew P., 21024 Biandronno - Frazione Cassinetta (IT); Gilmore, Donald J., 21024 Biandronno - Frazione Cassinetta (IT); Gross, Michael R., 21024 Biandronno - Frazione Cassinetta (IT)
(74) Representative: Spina, Alessandro

(56) References cited:
- EP-A1- 3 677 841
- WO-A1-2016/131109
- WO-A1-2017/044876
- WO-A1-2017/182214
- WO-A2-2010/147366
- CN-A- 104 287 640
- DE-A1-102013 110 642

## Description

### FIELD OF DISCLOSURE

### BACKGROUND

Household appliances typically comprise one or more components responsible for the electromechanical operations of the appliance. For example, an oven can include an electronics module with a memory, as well as a user-interface component, such as a control panel or keypad, for a user to issue commands to the oven. Some appliances can also have an imaging device.

Food items can undergo changes in appearance during a cooking process, and it can be beneficial to track these changes or monitor a current state of a food item to prevent overcooking or overbaking.

WO2016131109A1 relates to cooking apparatus and in particular to a system and method to monitor the colour change of food during a cooking procedure.

DE102013110642A2 relates to a cooking device with a housing, a cooking space which is formed in the housing, a plurality of inserts in which food carriers can be arranged, and at least one camera. WO2010147366A2 relates to a cooker and to a control method thereof. The present invention compares the value of RGB color of foodstuff read from the image of foodstuff scanned by an image sensor with the value of preset reference RGB color, to thereby enable a user to select a cooking level of the foodstuff.

### SUMMARY

In one aspect, a cooking appliance includes a cooking chamber, an imaging device for capturing an image of a food item inside the cooking chamber, a computing device in communication with the imaging device and comprising a software module configured to trigger the capture of images from the imaging device at an event triggered interval, and a user interface in communication with the computing device and configured to display the captured images.

In another aspect, a method of cooking a food item in a cooking appliance having a cooking chamber and a display includes setting an event triggered interval, triggering the capture of an image of the food item from the imaging device at the event triggered interval; and displaying the captured image on one of a user's mobile device or oven display.

### BRIEF DESCRIPTION OF THE DRAWINGS

In the drawings:
FIG. 1 is a schematic view of an exemplary household cooking appliance.
FIG. 2 illustrates a schematic of the appliance of FIG. 1 in communication with a user's mobile device.
FIG. 3 illustrates an exemplary visual display on the user's mobile device or the oven's display.
FIG. 4 is a schematic view of an electronic system utilized in the household appliance of FIG. 1.

### DESCRIPTION OF EMBODIMENTS OF THE INVENTION

Aspects of the disclosure relate to a household appliance capable of cooking food items, wherein the appliance includes an imaging device for pushing images of the food item to a user's mobile device or the oven display at triggered interval events.

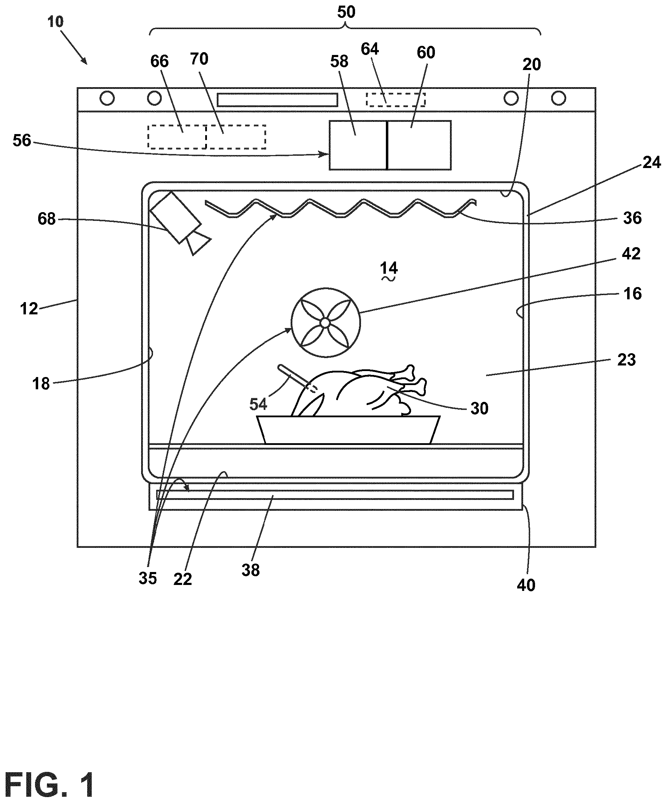

FIG. 1 illustrates an exemplary automatic household appliance in the form of an oven 10. It will be understood that while illustrated as an oven 10, the household appliance can include any home appliance used for cooking or preparing food, such as a toaster oven, cooktop, or microwave. The oven 10 can include a cabinet 12 with an open-faced cooking chamber 14 defined by a pair of spaced side walls 16, 18 joined by a top wall 20, a bottom wall 22, and a rear wall 23. A door 24 selectively closes the chamber 14. The door 24 in an open position can allow a user to access the chamber 14, while the door 24 in a closed position prevents access to the chamber 14 and seals the chamber 14 from the external environment. A food item 30 can be placed within the chamber 14 to be cooked by the oven 10.

The oven 10 can also include a heating system 35 having an upper heating element 36, commonly referred to as a broiler, and a lower heating element 38. The lower heating element 38 is illustrated in the example of FIG. 1 as being hidden or mounted beneath the cooking chamber bottom wall 22 in a heating element housing 40, where heat from the lower heating element 38 can conduct through the bottom wall 22 and into the chamber 14. Alternatively, the lower heating element 38 can be mounted inside the chamber 14, where heat can conduct or radiate inside the chamber 14. Further, the upper and lower heating elements 36, 38 can be mounted at the side walls 16, 18 of the chamber 14. The heating system 35 can further include a convection fan 42 that circulates air or steam within the chamber 14. The convection fan 42 can be any suitable fan and can be mounted in any suitable location of the chamber 14, such as in the rear wall 23.

An electronic system 50 capable of detecting, monitoring, or controlling various operation parameters can be included in the oven 10. The electronic system 50 can include a control panel 56 disposed on the oven cabinet 12 and having a user interface 58 and display 60 for inputting desired parameters such as temperature or cooking time. The user interface 58 is illustrated herein as being integrated with the display 60 in the form of a touch-screen display on the oven cabinet 12. It is also contemplated that the user interface 58 can include manually-operated components such as buttons or dials, and a separate display 60 can also be disposed on the cabinet 12. Furthermore, in an example where the display 60 includes a touch-screen display, the user interface 58 can include a combination of touch-screen components integrated with the display 60 as well as manually-operated components separate from the display 60.

Furthermore, the electronic system 50 can be in communication with one or more sensors such as a temperature probe 54 which can be included in the oven 10 and capable of detecting the ambient temperature within the chamber 14 or an internal temperature of the food item 30. The sensor or temperature probe 54 can output a signal indicating a sensed temperature via a wired or wireless connection as desired to the electronic system 50. Another example of a sensor might be a humidity sensor for sensing humidity of a food item, which can be an indication of doneness.

A controller 64 can also be included in the electronic system 50, located in the cabinet 12 and configured to communicate with the control panel 56. The controller 64 can include any suitable controller for the oven environment, and it is contemplated that the user interface 58 can be utilized to select an oven cooking program which the controller 64 is capable of implementing. Additionally, the oven 10 can include an appliance communication module 66 capable of providing for data communication with a server or a mobile device, using wired or wireless connections where appropriate.

The oven electronic system 50 further includes a camera 68, illustrated as being disposed within the chamber 14. The camera 68 can be positioned anywhere within or adjacent to the chamber 14, including within or outside the door 24, and is capable of imaging the food item 30, either by capturing static images or video. Furthermore, a computing device 70 is configured to receive image or video data from the camera 68 and perform computations or comparison operations as desired. While the computing device 70 is illustrated herein as being included in the oven 10, it is also contemplated that the computing device 70 can be located in a remote device such as a mobile phone or tablet or in a cloud-based server, where the remote device or server can be in data communication with the oven 10.

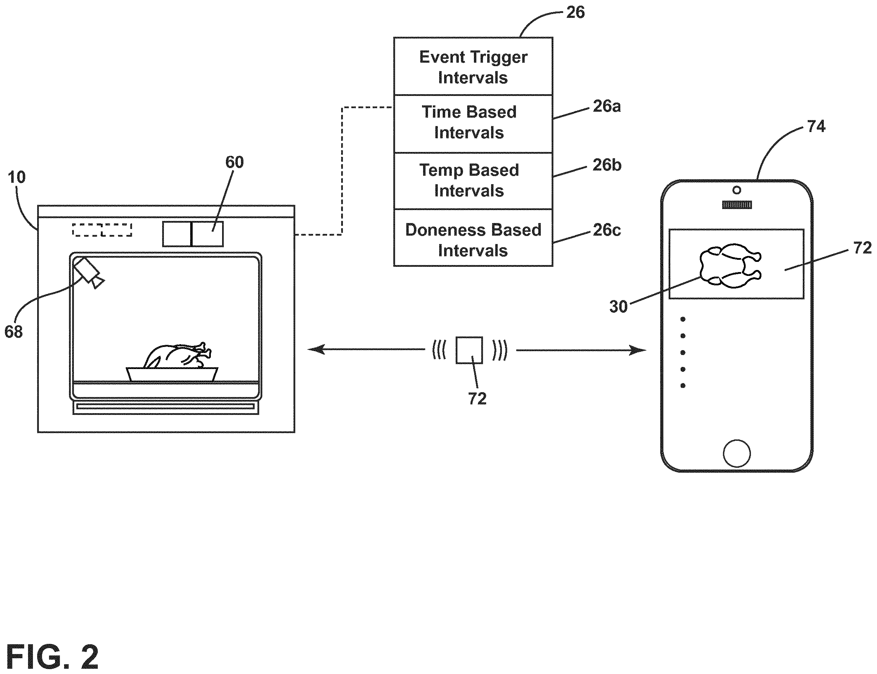

FIG. 2 illustrates a schematic view of the oven 10 in accordance with the present disclosure. The oven 10 leverages a camera 68 to intelligently push an image 72 of a food item 30 to a user's mobile device 74 or the oven's display 60 at one or more event triggered intervals 26. Event triggered intervals 26 include event triggers such as temperature-based intervals 26b or "doneness" based intervals 26c. At the event triggered interval 26, the oven's electronic system 50 pushes an image 72 of the food item 30 to a user's mobile device 74 such as a smart phone or tablet or to the oven's display 60 thereby allowing the user to visually inspect the food items' 30 current status.

Examples of event triggered intervals 26 can be any interval pre-programmed into the oven's electronic system 50 or any user defined interval. In one embodiment not forming part of the invention, an event triggered interval 26 can be a time-based interval 26a such as specific time remaining in a cooking program such as when a cooking program has 2 minutes of time remaining. Another example of a time-based interval 26a might be pushing an image 72 every 5 or 10 minutes during a cooking cycle. The interval could be longer or shorter based on the cooking cycle programmed time, or, the interval or set-point could be input by the user. At each event triggered interval 26, the camera 68 can be triggered by the electronic system 50 to send the user an image 72.

According to one of the alternate embodiments of the invention, an event triggered interval 26 is a temperature-based interval 26b such as when the temperature of the food item 30 reaches a certain temperature or falls within a predetermined range. In this example, a sensor such as a temperature probe 54 can be inserted into the food item 30 for measuring the temperature of the food item 30. The temperature probe 54 can be in communication with the oven's electronic system 50 and when the electronic system 50 detects that the temperature of the food item is within, for example, 25 degrees of a predetermined target temperature, the event triggered interval 26 can be triggered. The temperature degree interval could be longer or shorter, or, could be an interval input by the user. Another temperature-based interval 26b might be pushing an image 72 to a user's mobile device 74 at increments of 5 or 10 degrees during a cooking cycle or at a specific set-point. Once again, the interval increments could be longer or shorter, or, the interval increments or set-point could be selected by the user.

According to the other alternate embodiment of the invention, an event triggered interval 26 occurs at a doneness-based interval 26c such as when a level of "brownness" is achieved. For example, certain food items may brown or change color over a cooking cycle. The computing device 70 in the oven's electronic system 50 can be programmed with an algorithm that can compare the brownness or color change of a food item with a desired brownness or color level pre-programmed in the electronics system 50. Once the comparison is made, the computing device 70 can be programmed to transmit an image 72 of the food item 30 at one or various brownness intervals or at intervals of increasing brownness such as every 5 or 10 degrees. In this example, the doneness-based interval can be longer or shorter, or, an interval or set-point selected by the user.

As should be recognized, while the doneness-based interval 26c could be based on "brownness", it could also be based on other indications or measurements of doneness such as internal temperature, humidity, raising of dough, bubbling, crispiness, or other indications. One or more sensors could measure one or more doneness-based indications and the oven's electronic system 50 could be programmed to trigger an event based on one or more intervals or combinations thereof.

In another example not forming part of the invention, an event triggered interval 26 can occur at a cooking cycle event 26d such as when flipping, stirring, mixing, adding a topping, finishing (e.g. turning on the broiler), or any other event that may require user input / interaction. For example, the oven's electronic system 50 can push an image 72 of the food item 30 to a user's mobile device 74 when the food item 30 directions require user input or interaction.

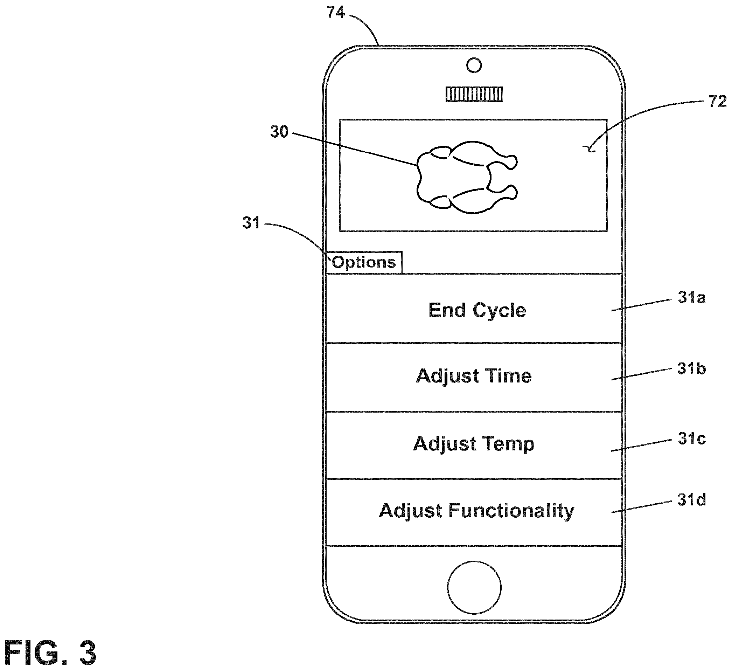

FIG. 3 illustrates an exemplary display on a user's mobile device 74 or the oven's display 60 upon an event trigger. When an event is triggered, the image 72 of the food item 30 can be pushed to one of a user's mobile device 74 or to the oven's display 60 along with a pre-programmed number of options 31 for adjusting the food cooking program or food cooking parameters. For example, the computing device 70 can be programmed with a number of options for adjusting the food cooking program or the cycle parameters, which can be pushed to the user's mobile device 74 or oven display 60. The options 31 presented to the user can be based on a number of factors such as the context of the food item being cooked or personal preferences of the user (i.e. such as previous settings, history of the user, or preprogrammed user preferences). In a non-limiting example, the user interface associated with the user's mobile device 74 or oven display 60 can prompt the user to end the cycle 31a, adjust cooking time 31b, adjust the temperature 31c, or adjust the functionality 31d of the oven. In this example, the user could be provided with an image 72 of the food item 30 and options to end the cycle 31a, adjust the cooking time 31b, adjust the temperature 31c of the cooking cycle, or to change the functionality 31d of the oven, such as such as turning on or off the convection fan, broiler or other oven functionalities.

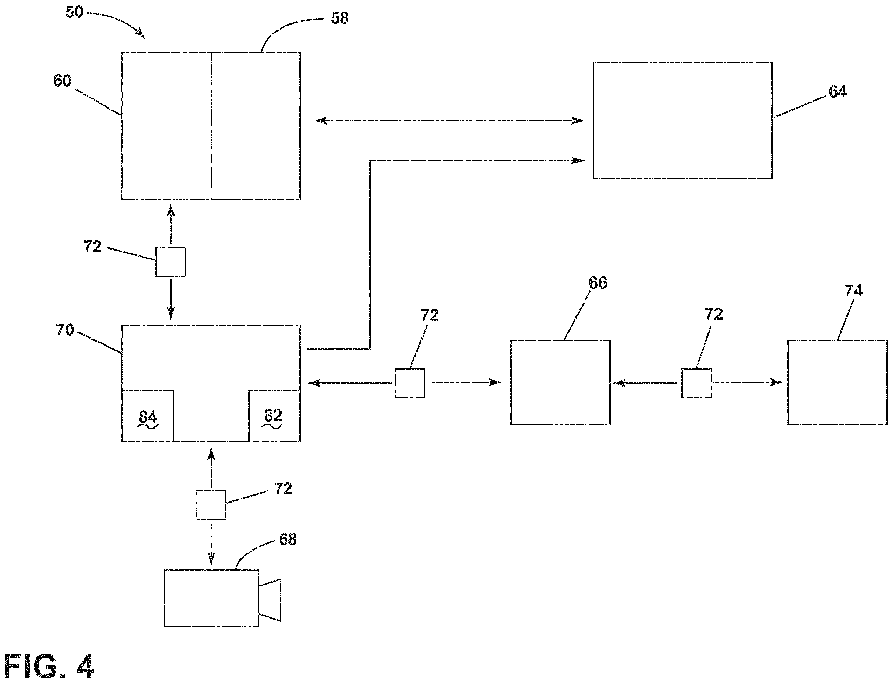

Referring now to FIG. 4, the electronic system 50 is shown in further detail where arrows illustrate exemplary data communication between illustrated components. It will be understood that other data or signal communications not illustrated may exist between components, and that other components may also be included in the electronic system 50.

It can be appreciated that the camera 68 can capture an image 72 and output this image 72 to the computing device 70, which transmits the image 72 to the display 60 or to a communication module 66 for subsequent transmission to a users' mobile device 74. In addition, the computing device 70 can store the image 72 in a memory 84. If enough images are taken, the memory 84 could store the images 72 in a time-elapse format for display on the oven's display 60 or on the user's mobile device 74.

The computing device 70 can include a software module 82 configured with algorithms that can compute the event trigger intervals 26 and that triggers the capture of images 72 from the camera 68 when an event is triggered. Once an image 72 is captured, the computing device can be configured to send the image 72 to the oven's display 60 or to the communications module 66 for subsequent transmission to a user's mobile device 74. In addition, the software module 82 can be configured with algorithms that compute the options 31 for adjusting the food cooking program or cycle parameters that can be sent to the oven's display 60 or to the communications module 66 for subsequent transmission to a user's mobile device 74. In addition, the software module 82 can be configured with software that acts as a feedback loop for improving performance of the system. For example, after the cooking cycle is complete, the software module 82 could send a notification to the user's mobile device 74 seeking input on the cooking cycle. The event triggered intervals 26 could be adjusted for the next cycle based on the user's input. It should be recognized that while illustrated within the oven electronic system 50, it is also contemplated that the software module 82 can be located in user's mobile device 74 or in a cloud-based server (not shown), in non-limiting examples. In addition, it should be recognized that the algorithms for the software module 82 including any other data can be stored in the memory 84.

The controller 64 can be provided to receive input from the oven user interface 58 or the user's mobile device 74 and issue commands to the oven 10. In one example, after the computing device 70 has sent to images to the user's mobile device 74 along with a list of options 31, the user can add additional time or adjust the cooking time 31b, adjust the temperature 31c or perform various other functions through the user's mobile device 74. The device 74 can transmit instructions to the oven's communication module 66, which can send the user's directions to the over's controller 64 via the computing device 70 for controlling the oven's cooking cycle or any other cycle parameter.

A method of cooking the food item 30 in the oven 10 can include setting an event triggered interval via the user's mobile device 74 or the oven's user interface 58. After the event triggered intervals are set, triggering the capture of an image of the food item from the imaging device at the event triggered interval. Finally, the captured images can be displayed on one of a user's mobile device or oven display.

To the extent not already described, the different features and structures of the various embodiments can be used in combination with each other as desired. That one feature may not be illustrated in all of the embodiments is not meant to be construed that it cannot be, but is done for brevity of description. Thus, the various features of the different embodiments can be mixed and matched as desired to form new embodiments, whether or not the new embodiments are expressly described. All combinations or permutations of features described herein are covered by this disclosure. In addition to the concepts covered by the below claims, the following concepts can also provide the basis for claims in any possible combinations:

A method of cooking a food item further comprising the step of displaying cooking adjustment options on one of a user's mobile device or oven display.

A method of cooking a food item further comprising allowing adjustment of a cooking cycle or cooking parameters by a user based on the displayed options.

A method of cooking a food item wherein the options displayed are based on the context of the food item being cooked or personal preferences of the user.

A method of cooking a food item wherein the options displayed are one of ending the cycle, adjusting cooking time, adjusting temperature or adjusting functionality.

A method of cooking a food item wherein the event triggered intervals are repeated during a cooking cycle.

## Claims

1. A cooking appliance (10) comprising:
a cooking chamber (14) for receiving a food item (30) for cooking;
a camera (68) having a field of view including at least a portion of the cooking chamber (14) and configured to capture an image (72) of a food item (30) inside the cooking chamber (14);
a computing device (70) in communication with the camera (68) **characterized in that** the cooking appliance comprises
a software module (82) configured to trigger the capturing of images (72) by the camera (68) at an event triggered interval (26), the event triggered interval (26) being based on a temperature-based interval (26b) or on a doneness-based interval (26c);
a temperature probe (54) for measuring an internal temperature of the food item (30), the temperature probe (54) being in communication with the computing device (70) and configured to output a temperature reading; and
a user interface (58) in communication with the computing device (70) and configured to display the captured images (72).

2. The cooking appliance (10) of claim 1 wherein the user interface (58) allows adjustment of cooking cycle parameters.

3. The cooking appliance (10) of claim 2 wherein the event triggered interval (26) is based on a time-based interval (26a).

4. The cooking appliance (10) of claim 3 wherein the time-based interval (26a) is based on one of a set-point or a time interval.

5. The cooking appliance (10) of claim 4 wherein either the time interval or set-point is input by a user.

6. The cooking appliance (10) of any of claims 1-5 wherein the temperature-based interval (26b) is based on one of a set-point or a temperature interval.

7. The cooking appliance (10) of claim 6 wherein either the temperature interval or set-point is input by a user.

8. The cooking appliance (10) of any of claims 1-7 wherein the doneness-based interval (26c) is based on image recognition of a predetermined color change of the food item (30).

9. The cooking appliance (10) of any of claims 1-8 further comprising a controller (64) configured to modify operation of the appliance (10) based on user input.

10. A method of cooking a food item (30) in a cooking appliance (10) having a cooking chamber (14) for receiving a food item (30) for cooking, a camera (68) having a field of view including at least a portion of the cooking chamber (14) and configured to capture an image (72) of a food item (30) inside the cooking chamber (14); a computing device (70) in communication with the camera (68) and a user interface (58) in communication with the computing device and configured to display captured images, the method **characterized by** a software module (82) configured to trigger the capturing of images by the imaging device (68) at an event triggered interval (26), setting an event triggered interval (26), the event triggered interval (26) being based on a temperature-based interval (26b) or on a doneness-based interval (26c); measuring an internal temperature of the food item (30) by means of a temperature probe (54) for measuring an internal temperature of the food item (30), the temperature probe (54) being in communication with the computing device (70) and configured to output a temperature reading; triggering, based on the measured internal temperature of the food item (30), the capture of an image (72) of the food item (30) from the camera (68) at the event triggered interval (26); and displaying the captured image (72) on one of a user's mobile device (74) or oven display (60).

## Patentansprüche

1. Kochgerät (10), umfassend:
eine Kochkammer (14) zur Aufnahme eines Lebensmittels (30) zum Kochen;
eine Kamera (68), die ein Sichtfeld aufweist, welches mindestens einen Abschnitt der Kochkammer (14) einschließt, und die dazu konfiguriert ist, ein Bild (72) eines Lebensmittels (30) im Inneren der Kochkammer (14) zu erfassen;
eine Rechenvorrichtung (70), die mit der Kamera (68) kommuniziert, **dadurch gekennzeichnet, dass** das Kochgerät ein Softwaremodul (82) umfasst, welches dazu konfiguriert ist, das Erfassen von Bildern (72) durch die Kamera (68) in einem ereignisgetriggerten Intervall (26) auszulösen, wobei das ereignisgetriggerte Intervall (26) auf einem temperaturbasierten Intervall (26b) oder auf einem kochfertig-basierten Intervall (26c) basiert;
eine Temperatursonde (54) zum Messen einer Temperatur im Inneren des Lebensmittels (30), wobei die Temperatursonde (54) mit der Rechenvorrichtung (70) kommuniziert und dazu konfiguriert ist, einen Temperaturmesswert auszugeben; und
eine Benutzerschnittstelle (58), die mit der Rechenvorrichtung (70) kommuniziert und dazu konfiguriert ist, die erfassten Bilder (72) anzuzeigen.

2. Kochgerät (10) nach Anspruch 1, wobei die Benutzerschnittstelle (58) eine Einstellung von Kochzyklusparametern ermöglicht.

3. Kochgerät (10) nach Anspruch 2, wobei das ereignisgetriggerte Intervall (26) auf einem zeitbasierten Intervall (26a) basiert.

4. Kochgerät (10) nach Anspruch 3, wobei das zeitbasierte Intervall (26a) entweder auf einem Sollwert oder einem Zeitintervall basiert.

5. Kochgerät (10) nach Anspruch 4, wobei entweder das Zeitintervall oder der Sollwert von einem Benutzer eingegeben worden ist.

6. Kochgerät (10) nach einem der Ansprüche 1-5, wobei das temperaturbasierte Intervall (26b) auf einem Sollwert oder einem Temperaturintervall basiert.

7. Kochgerät (10) nach Anspruch 6, wobei entweder das Temperaturintervall oder der Sollwert von einem Benutzer eingegeben worden ist.

8. Kochgerät (10) nach einem der Ansprüche 1-7, wobei das kochfertig-basierende Intervall (26c) auf einer Bilderkennung einer vorbestimmten Farbänderung des Lebensmittels (30) basiert.

9. Kochgerät (10) nach einem der Ansprüche 1-8 weiter umfassend eine Steuerung (64), die dazu konfiguriert ist, einen Betrieb des Geräts (10) basierend auf der Grundlage einer Benutzereingabe zu ändern.

10. Verfahren zum Kochen eines Lebensmittels (30) in einem Kochgerät (10), das eine Kochkammer (14) aufweist zur Aufnahme eines Lebensmittels (30) zum Kochen, eine Kamera (68), die ein Sichtfeld aufweist, welches mindestens einen Abschnitt der Kochkammer (14) einschließt, und die dazu konfiguriert ist, ein Bild (72) eines Lebensmittels (30) im Inneren der Kochkammer (14) zu erfassen; eine Rechenvorrichtung (70), die mit der Kamera (68) kommuniziert und eine Benutzerschnittstelle (58), die mit der Rechenvorrichtung (70) kommuniziert und dazu konfiguriert ist, erfasste Bilder (72) anzuzeigen, wobei das Verfahren **gekennzeichnet ist durch** ein Softwaremodul (82), welches dazu konfiguriert ist, das Erfassen von Bildern (72) durch die Kamera (68) in einem ereignisgetriggerten Intervall (26) auszulösen, ein ereignisgetriggertes Intervall (26) einzustellen, wobei das ereignisgetriggerte Intervall (26) auf einem temperaturbasierten Intervall (26b) oder auf einem kochfertig-basierten Intervall (26c) basiert;
Messen einer Temperatur im Inneren des Lebensmittels (30) mittels einer Temperatursonde (54) zum Messen einer Temperatur im Inneren des Lebensmittels (30), wobei die Temperatursonde (54) mit der Rechenvorrichtung (70) kommuniziert und dazu konfiguriert ist, einen Temperaturmesswert auszugeben; und
Auslösen, basierend auf der im Inneren des Lebensmittels (30) gemessenen Temperatur, der Aufnahme eines Bildes (72) des Lebensmittels (30) von der Kamera (68) in dem ereignisgetriggerten Intervall (26); und
Anzeigen des erfassten Bildes (72) auf einer mobilen Vorrichtung (74) oder einem Ofen-Display (60) eines Benutzers.

## Revendications

1. Appareil de cuisson (10) comprenant :
une chambre de cuisson (14) pour recevoir un aliment (30) à cuire ;
une caméra (68) présentant un champ de vision incluant au moins une partie de la chambre de cuisson (14) et configurée pour capturer une image (72) d'un aliment (30) à l'intérieur de la chambre de cuisson (14) ;
un dispositif informatique (70) en communication avec la caméra (68) **caractérisé en ce que** l'appareil de cuisson comprend un module logiciel (82) configuré pour déclencher la capture d'images (72) par la caméra (68) à un intervalle déclenché par événement (26), l'intervalle déclenché par événement (26) étant basé sur un intervalle (26b) basé sur une température ou sur un intervalle (26c) basé sur une cuisson souhaitée ; une sonde de température (54) pour mesurer une température interne de l'aliment (30), la sonde de température (54) étant en communication avec le dispositif informatique (70) et configurée pour délivrer en sortie une lecture de température ; et
une interface utilisateur (58) en communication avec le dispositif informatique (70) et configurée pour afficher les images capturées (72).

2. Appareil de cuisson (10) selon la revendication 1, dans lequel l'interface utilisateur (58) permet un ajustement de paramètres de cycle de cuisson.

3. Appareil de cuisson (10) selon la revendication 2, dans lequel l'intervalle déclenché par événement (26) est basé sur un intervalle (26a) basé sur le temps.

4. Appareil de cuisson (10) selon la revendication 3, dans lequel l'intervalle (26a) basé sur le temps est basé sur l'un d'un point de consigne ou d'un intervalle de temps.

5. Appareil de cuisson (10) selon la revendication 4, dans lequel soit l'intervalle de temps soit le point de consigne est entré par un utilisateur.

6. Appareil de cuisson (10) selon l'une quelconque des revendications 1-5, dans lequel l'intervalle (26b) basé sur la température est basé sur l'un d'un point de consigne ou d'un intervalle de température.

7. Appareil de cuisson (10) selon la revendication 6, dans lequel soit l'intervalle de température soit le point de consigne est entré par un utilisateur.

8. Appareil de cuisson (10) selon l'une quelconque des revendications 1-7, dans lequel l'intervalle (26c) basé sur une cuisson souhaitée est basé sur une reconnaissance d'image d'un changement de couleur prédéterminé de l'aliment (30).

9. Appareil de cuisson (10) selon l'une quelconque des revendications 1-8, comprenant en outre un dispositif de comande (64) configuré pour modifier le fonctionnement de l'appareil (10) sur la base d'une entrée d'utilisateur.

10. Procédé de cuisson d'un aliment (30) dans un appareil de cuisson (10) présentant une chambre (14) pour recevoir un aliment (30) à cuire, une caméra (68) présentant un champ de vision incluant au moins une partie de la chambre de cuisson (14) et configurée pour capturer une image (72) d'un aliment (30) à l'intérieur de la chambre de cuisson (14) ; un dispositif informatique (70) en communication avec la caméra (68) et une interface utilisateur (58) en communication avec le dispositif informatique et configurée pour afficher des images capturées, le procédé **caractérisé par** un module logiciel (82) configuré pour déclencher la capture d'images par le dispositif d'imagerie (68) à un intervalle déclenché par événement (26),
régler un intervalle déclenché par événement (26), l'intervalle déclenché par un événement (26) étant basé sur un intervalle (26b) basé sur une température ou sur un intervalle (26c) basé sur une cuisson souhaitée ;
mesurer une température interne de l'aliment (30) au moyen d'une sonde de température (54) pour mesurer une température interne de l'aliment (30), la sonde de température (54) étant en communication avec le dispositif informatique (70) et configurée pour délivrer en sortie une lecture de température ;
déclencher, sur la base de la température interne mesurée de l'aliment (30), la capture d'une image (72) de l'aliment (30) par la caméra (68) à l'intervalle déclenché par événement (26) ; et
afficher l'image capturée (72) sur l'un d'un dispositif mobile (74) ou d'un affichage de four (60) d'utilisateur.
